# EUROPEAN PATENT APPLICATION

(11) **EP 0 976 592 A1**
(43) Date of publication of application: **02.02.2000**
(21) Application number: 99202100.6
(22) Date of filing: 29.06.1999
(51) Int. Cl.: B60H 1/00

(54) **Blower motor assembly with air inlet and an insert member therefor**

(30) Priority: 31.07.1998 GB 9816588
(71) Applicant: Delphi Technologies, Inc., Troy, MI 48007 (US)
(72) Inventor: Augier, Eric, 57390 Russange (FR)
(74) Representative: Denton, Michael John

(57) **Abstract**

A blower motor assembly (10) for the air conditioning system or heating and ventilation system of the passenger compartment of a motor vehicle comprising a housing (12) having an air inlet (14) and an air outlet (16) which is substantially perpendicular to the air inlet; an electric motor (18) having a rotatable output shaft (20) positioned inside the housing and substantially axially aligned with the air inlet; a centrifugal fan (22) mounted on the output shaft inside the housing between the air inlet and the air outlet, the fan having a base portion (24) secured to the output shaft and a number of blades (26) extending from the circumferential edge (28) of the base portion substantially parallel to the output shaft; and an insert member (32) positioned upstream of the fan, the insert member having an annular member (34) mounted in the air inlet and substantially axially aligned therewith, a central member (36) axially aligned with the output shaft, and a number of fins (38) extending radially from the central member and connected to the annular member, each fin extending from the annular member towards the base portion of the fan and having an edge (40) substantially parallel to, and positioned adjacent to, the blades of the fan. Reduced noise generation in the low frequency range.

## Description

### Technical Field

The present invention relates to a blower motor assembly for the air conditioning system or heating and ventilation system of a passenger compartment of a motor vehicle, and an insert member for the blower motor assembly.

### Background of the Invention

A blower motor assembly is used to drive air from an air inlet through heat exchangers in an air conditioning system or heating and ventilation system of the passenger compartment of a motor vehicle. The blower motor assembly typically comprises a housing having an air inlet and an air outlet; an electric motor with a rotatable output shaft positioned inside the housing; and a centrifugal fan or wheel mounted on the motor shaft inside the housing between the air inlet and the air outlet. The air inlet is substantially axially aligned with the motor shaft. The air outlet is substantially perpendicular to the air inlet. With this known arrangement, air passes through the housing with the air flow path moving though substantially 90 degrees as air flows from the inlet to the outlet. This known arrangement can generate noise, especially in the low frequency range (the rumble noise range).

### Summary of the Invention

It is an object of the present invention to overcome the above mentioned disadvantage.

A blower motor assembly in accordance with the present invention for the passenger compartment of a motor vehicle comprises a housing having an air inlet and an air outlet which is substantially perpendicular to the air inlet; an electric motor having a rotatable output shaft positioned inside the housing and substantially axially aligned with the air inlet; a centrifugal fan mounted on the output shaft inside the housing between the air inlet and the air outlet, the fan having a base portion secured to the output shaft and a number of blades extending from the circumferential edge of the base portion substantially parallel to the output shaft; and an insert member positioned upstream of the fan, the insert member having an annular member mounted in the air inlet and substantially axially aligned therewith, a central member axially aligned with the output shaft, and a number of fins extending radially from the central member and connected to the annular member, each fin extending from the annular member towards the base portion of the fan and having an edge substantially parallel to, and positioned adjacent to, the blades of the fan.

The use of the insert member has been found to provide noise reduction in the low frequency range.

The present invention also includes an insert member for the blower motor assembly.

### Brief Description of the Drawings

The present invention will now be described, by way of example, with reference to the accompanying drawings, in which:-
Figure 1 is a cross-sectional view of a blower motor assembly in accordance with the present invention; and
Figure 2 is a perspective view of the insert member of the blower motor assembly of Figure 1.

### Description of the Preferred Embodiment

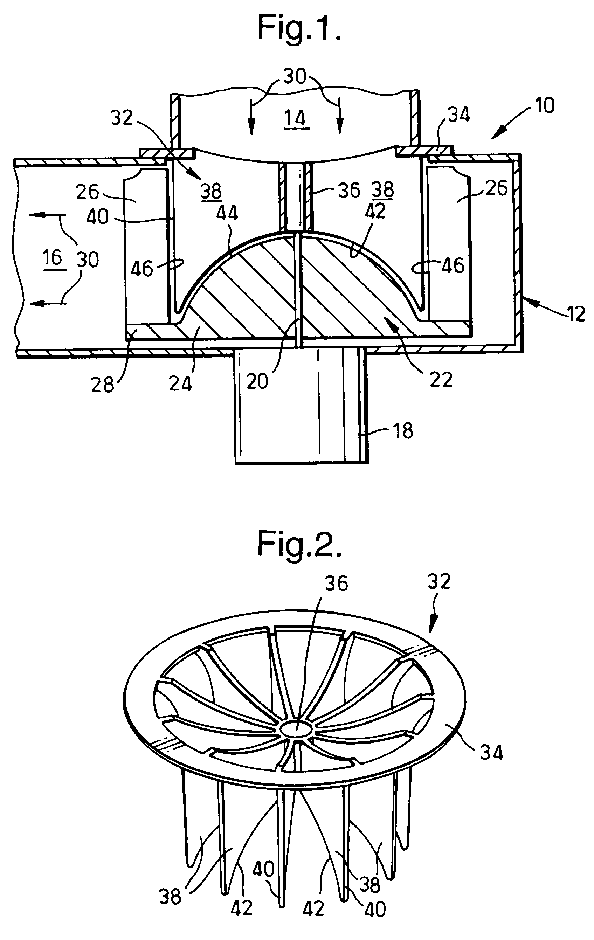

Referring to Figure 1 of the drawings, the blower motor assembly 10 is for use in an air conditioning system or heating and ventilation system (not shown) for a passenger compartment of a motor vehicle. The blower motor assembly 10 comprises a housing 12 having an air inlet 14 and an air outlet 16 which are substantially perpendicular to one another. An electric motor 18 is mounted on the housing 12 and has a rotatable output shaft 20 which is substantially axially aligned with the air inlet 14 and positioned inside the housing 12. A centrifugal fan or wheel 22 is mounted on the shaft 20 inside the housing 12 between the air inlet 14 and the air outlet 16. The fan or wheel 22 is substantially cup-shaped and has a base portion 24 secured to the shaft 20, with blades 26 at the outer circumferential edge 28 of the base portion which extend substantially parallel with the axis of the shaft 20. Rotation of the fan 22 by the motor 18 causes air to flow from the air inlet 14 to the air outlet 16 in a flow path 30 which turns though substantially 90 degrees. The arrangement thus far described is known and will not be described in further detail.

In accordance with the present invention, the blower motor assembly 10 further comprises an insert member 32, which is shown in greater detail in Figure 2, which is positioned in the flow path 30 upstream of the fan 22. The insert member 32 comprises an annular member 34 which is mounted in the air inlet 14 and is axially aligned therewith, a central member 36 which aligns with the axis of the shaft 20, and a number of fins 38 extending radially from the central member and connected to the annular member. The fins 38 are shaped to extend from the annular member 34 inside the fan 22 towards the base portion 24 of the fan. Each fin 38 has an edge 40 which extends substantially parallel with the blades 26 of the fan 22, and an edge 42 which is shaped to correspond to the shape of the inner surface 44 of the base portion 24 of the fan. The edges 40,42 are positioned adjacent to the inner surface 46 of the blades 26 and the inner surface 44 of the base portion 24, respectively. The use of the insert member 32 reduces noise generation in the low frequency range (80 to 500 Hz), without having any significant impact on air flow performance.

It has been found that an optimum performance in noise reduction is achieved by having the edges 40 of the fins 38 extend along substantially the whole of the length of the inner surface 46 of the blades 26 of the fan 22. The number of fins 38, and/or the thickness of the fins, and/or the angular separation of the fins may also be predetermined for optimum noise reduction.

In a preferred arrangement, each fin 38 is substantially planar as shown, although fins having a curved shape may be used in the alternative. The fins 38 are preferably substantially equally angularly spaced apart, although fins having a predetermined unequal angular separation may be used in the alternative. The central member 36 is preferably cylindrical. The inner surface 44 of the base portion 24 of the fan 22 is preferably convex in shape, with the edges 42 of the adjacent fins 38 being concave in shape. The insert member 32 is preferably moulded from plastics material.

## Claims

1. A blower motor assembly for the passenger compartment of a motor vehicle comprising a housing having an air inlet and an air outlet which is substantially perpendicular to the air inlet; an electric motor having a rotatable output shaft positioned inside the housing and substantially axially aligned with the air inlet; a centrifugal fan mounted on the output shaft inside the housing between the air inlet and the air outlet, the fan having a base portion secured to the output shaft and a number of blades extending from the circumferential edge of the base portion substantially parallel to the output shaft; and an insert member positioned upstream of the fan, the insert member having an annular member mounted in the air inlet and substantially axially aligned therewith, a central member axially aligned with the output shaft, and a number of fins extending radially from the central member and connected to the annular member, each fin extending from the annular member towards the base portion of the fan and having an edge substantially parallel to, and positioned adjacent to, the blades of the fan.

2. A blower motor assembly as claimed in Claim 1, wherein the edge of the fins extend along substantially the whole of the length of the blades of the fan.

3. A blower motor assembly as claimed in Claim 1 or Claim 2, wherein each fin has another edge which is positioned adjacent to the base portion of the fan.

4. A blower motor assembly as claimed in Claim 3, wherein the base portion of the fan has an inner surface which is convex in shape, and the adjacent edges of the fins are concave in shape.

5. A blower motor assembly as claimed in any one of Claims 1 to 4, wherein each fin is substantially planar.

6. A blower motor assembly as claimed in any one of Claims 1 to 5, wherein the fins are substantially equally angularly spaced apart.

7. A blower motor assembly as claimed in any one of Claims 1 to 6, wherein the central member is cylindrical.

8. A blower motor assembly as claimed in any one of Claims 1 to 7, wherein the insert member is moulded from plastics material.

9. An insert member for a blower motor assembly as claimed in any one of Claims 1 to 8, wherein the insert member comprises an annular member for mounting in the air inlet of the blower motor assembly, a central member axially aligned with the annular member, and a number of fins extending radially from the central member and connected to the annular member, each fin extending from the annular member and having an edge of predetermined length which extends substantially parallel to the axis of the central member.
